# EUROPEAN PATENT APPLICATION

(11) **EP 3 085 525 A1**
(43) Date of publication of application: **26.10.2016**
(21) Application number: 16460024.9
(22) Date of filing: 18.04.2016
(51) Int. Cl.: B32B 5/12, B32B 5/22, B32B 5/24, B32B 5/26, B32B 7/04, B32B 7/06, B32B 7/12, B32B 15/08, B32B 15/085, B32B 27/12, B32B 27/30, B32B 27/32, B32B 1/04, B32B 3/14, B32B 3/16, B32B 3/18, D04H 1/4374, G10K 11/162, D04H 1/76, G10K 11/168

(54) **A LAMELLAR INSULATION MAT AND A PRODUCTION LINE FOR MANUFACTURING THE LAMELLAR INSULATION MAT**

(30) Priority: 21.04.2015 PL 41208115
(71) Applicant: Tomisol, Aneta Tabor, 38-500 Sanok (PL)
(72) Inventor: Tabor, Aneta, 38-500 Sanok (PL)
(74) Representative: Warzybok, Tadeusz

(57) **Abstract**

A lamellar insulation mat comprising a set of lamellas constituting its width is characterised in that its set of lamellas (2) is made of polyester fibres the base of which is poly(ethylene terephthalate) (PET). Further, a production line for manufacturing the lamellar insulation mat comprises a loading-receiving table (8), a belt conveyor (9) situated downstream the table provided with two side strip guides (22) and situated transversely with respect to a two-segment roller/multi-belt conveyor (10), while between said table and said belt conveyor there is a pressure-cutting unit (11), whereas said two-segment conveyor, inner end of which is supported on a supporting structure (21), is connected with transversely situated pressure beam (18) resting on belt conveyor (16) situated cascade-like and parallel to said two-segment conveyor, and the supporting structure of said belt conveyor is equipped with the assembly (37) for unrolling a lining material, a set of spraying nozzles (41) spraying an adhesive onto the material, a set of pressure rollers (34), and a flying saw (43).

## Description

The subject of the present invention is a lamellar insulation mat and a production line for manufacturing the lamellar insulation mat made for ready-made board-shaped elements with fibrous structure. The lamellar insulation mat constituting the subject of the present invention is designed to be used to provide thermal, acoustical, and anti-condensation insulation of ducts and ventilation-air conditioning conduits, including low-temperature pipes of pipelines with arbitrary cross-sections as well as reservoirs and similar devices operating especially in rooms where special cleanliness is required, e.g. in hospitals, in the so-called clan rooms, as well as in the food manufacturing and chemical industry facilities.

Currently, in rooms and premises that require special cleanliness level, insulation materials based on rubber or synthetic materials are used, which increases the related manufacturing costs.

A German patent description No. DE 2307577 C3 reveals a method of manufacturing insulation mats consisting in transformation of a material into thin mineral fibres by spinning them out from a high-speed centrifuge spindles, with continuous supply of curable binder, and fibres obtained this way are collected on a conveyor belt in the form of a ribbon of fibres in which said fibres are oriented longitudinally with respect to axis of the ribbon. Next, the ribbon of fibres is cut longitudinally into strips which are then turned by 90° along their longitudinal axes, after which the strips (lamellas) formed this way are joined with each other creating thus a fabric-like product, which is then cut into lengths needed to compose board-shaped elements. As a result of turning the strips, fibres of finished boards are oriented in the plane perpendicular to surfaces of these boards, as a result of which boards are obtained with significant rigidity and mechanical strength in direction perpendicular to their surfaces.

Polish patent description No. PL 168628 teaches a method of manufacturing insulation mats from strips made of mineral fibres, consisting in transforming a molten mineral material constituting the input for producing fibres, adding a binder to said fibres and arranging them into a ribbon on a conveyor belt, cutting the ribbon in longitudinal direction into strips (lamellas), turning them by 90° along their longitudinal axes, and bonding them together to form a board, whereas before cutting, the ribbon is arranged in a plurality of layers transversely with respect to longitudinal direction of the conveyor, forming thus a secondary ribbon which is subjected to superficial and longitudinal compression, and the strips cut out of it are cut into segments of required length.

Also patent description WO 03/056087 A1 (PCT/FI 02/01049) discloses a method of manufacturing a mat out of mineral fibrous material fibres of which are oriented towards thickness of said mat consisting in that a layer of mineral wool having its fibres oriented in the plane of the layer is compressed and hardened. Next, the layer is cut into board-shaped lamellas with a determined width, said lamellas are rotated by 90° around their longitudinal axes and in such position they are joined with neighbouring ones to form a lamellar mat, whereas said board-shaped lamellas are turned at the same time around their longitudinal axes in a compact set of multiple boards, and then are covered with coating layers.

Also from Polish patent description No. PL 194333 known is an elastic insulating mat comprising the proper mineral wool mat which on its lower surface has a glued sheet of plastic film or paper used to counteract circulation of air through the mat, while on its upper surface the mat has an adhesive glue layer covered with removable film sheet provided with a layer of silicone material, whereas the main direction of mineral wool fibres runs transversely to the mat plane.

Further, Polish patent description No. PL 214192 discloses an insulation mat characterised in that it comprises two layers of basic film containing polyethylene or polypropylene metallised outside with a layer of aluminium, and a layer of polyurethane film placed between said film layers.

From description of patent application No. PCT/DK 1995/00033 known is a rectangular insulation mat comprising a layer of mineral fibres which is made of a single material of mineral fibres bonded by means of a binder, whereas the fibres are oriented in said layer in the plane perpendicular to plane of the mat, and moreover, the mat has an air-permeable lining joined with it and covering at least a portion of the two main surfaces of the mat.

Moreover, from the above-quoted description of paten application No. PCT/FI 02/01049 known is a device for manufacturing a mat out of a mineral fibre comprising technical means of cutting the blanket of hardened mineral wool into slabs of predetermined length and width, means for rotating the slabs by 90° around their longitudinal axes, and means of combining the rotated slabs positioned side by side into a lamellar mat. The means for turning the slabs by 90° comprise a first turning cassette for receiving the set of slabs in their position side by side assumed after cutting, said cassette being located on a first belt conveyor, with the end of the cassette attached to a guide with a profile of annular segment, the other end of which is attached to edge of a second feed cassette made open at its both ends and located on a second belt conveyor, whereas the feed cassette is equipped in its lower portion with a pusher that forces the slabs onto the conveyor. Moreover, the second belt conveyor is equipped with a device for unrolling two webs of liner being glued to the rotated and joined slabs.

Also a Polish patent description No. PL 168628 teaches a system of devices used to realise a method for manufacturing insulation mats from strips (lamellas) of mineral fibres, comprising a furnace for melting a material for producing said fibres from which, via a channel, the molten material is supplied to a centrifuge provided with four high-speed spindles in which, under the of influence of strong stream of gas, the fibres are produced collected further on a perforated looped conveyor belt supported by three rollers. One of the rollers is driven as a result of which a primary ribbon is created out of the fibres which is then introduced in between two pendulum belts by means of a second conveyor belt, which has also the form of a loop. Lower ends of both pendulum belts are mounted rock-wise in the plane perpendicular to the direction of the third conveyor belt supported by means of two rollers of which one is driven, whereas on the third conveyor belt a ribbon of fibres is formed and stacked in layers pressed further in three roller assemblies, and then compacted longitudinally in another three roller assemblies rotating at speed lower than this of said pressing rollers. The compacted ribbons are introduced into a curing furnace and then cut longitudinally by means of a multi rip device into strips which are then cut transversely by means of a transverse saw. The cut strips (lamellas) are turned by 90° and put side by side to form a board-shaped element on the fourth conveyor belt, whereas their contact surfaces are provided with adhesive by means of a devices joining the strips with each other or instead, the strips are joined with each other by means of one-sided or two-sided self-adhesive film or paper.

Further, description of invention contained in Polish paten application No. P-300353 discloses a device for a mineral wool-manufacturing production line, in which a mineral alloy, transformed into fibres, is collected forming thus a thin primary wool mat on a conveyor reaching a suspended pendulous through conveyor fixing the primary wool mat on the receiving conveyor and thus forming a secondary wool mat composed of several layers. The receiving conveyor in the production line is equipped with devices for measuring the surface density of the secondary wool mat formed on the conveyor by connecting said device, via a regulator, with electric motor driving the receiving conveyor.

The objective of the current invention is to provide a design of a hydrophobic-vapour barrier structure with excellent sound-absorbing properties in the form of a special-purpose lamellar insulation mat suitable for different types of insulation used in devices installed in rooms subject to special cleanliness requirements or characterised with high humidity, or in circumstances when insulation weight plays an important role. A further objective of the invention is to provide a simple and compact design of the production line enabling production of lamellar insulation mats for various applications from ready-made board-shaped elements with fibrous structure, fibres of which are oriented horizontally along these elements.

The essential idea behind the concept of the lamellar insulation mat comprising a set of lamellas constituting its width, adjacent to each other by their side walls, made of insulating and elastic material with fibrous structure, situated transversely with respect a vapour-barrier lining of reinforced aluminised film or a PVC coat, glass-fibre fabric, or multicoloured PE film covering it on one side, and, if necessary, covered on the other side with self-adhesive glue layer covered with a removable plastic film of paper, consists in that the set of lamellas constituting the core of the mat is made of fibres the base of which is poly(ethylene terephthalate) (PET), whereas the polyester fibres used in it have preferably the volumetric density of 20-40 kg/m³, thermal conductivity *X*_{D} = 0.038-0.041 W/(m·K), and the reaction to fire class of type B.

On the other hand, the essential idea behind the production line for manufacturing the lamellar insulation mat from ready-made board-shaped elements with fibrous structure consists in that said line comprises a loading-receiving table, a belt conveyor situated downstream the table and provided in two side strip guides and situated perpendicularly to two-segment roller/multi-belt conveyor, between which situated is a pressure-cutting unit comprising a pressure roller, a set of two pressure rollers, and a multi rip device situated between them. The outer upper end of this two-segment conveyor is equipped with two strip guides situated perpendicularly to each other, between which there is a roller segment constituting a portion of the length of the conveyor, situated opposite a pair of pressure rollers, whereas between rollers of the roller segment mounted are multi-belt conveyors constituting the whole length of said conveyor, inner end of which, supported on a supporting structure, is connected detachably by means of pneumatic cylinders with transversely situated pressure beam, resting on a belt conveyor situated cascade-like and parallel to it. Downstream the pressure beam, the conveyor is equipped with two side strip guides, and further downstream the line, there is a transversely situated bracket equipped with a set of glue spraying nozzles, under which the conveyor is equipped with transversally situated set of pressure rollers, above which, on a supporting structure, mounted is an assembly comprising a roller unrolling the covering material and a roller receiving the material situated below said set of pressure rollers, with transversely and vertically situated flying saw mounted downstream of them.

Further, downstream the saw, the following components are fixed on their brackets: another pressure roller, a feeding roller, and receiving roller, and further downstream of them, subsequent glue sprayers are fixed to transversely situated bracket, while at the end of the framed supporting structure of the third belt conveyor, on the supporting structure connected with the latter, there is a rotationally mounted roller turning the insulation mat over. The roller-segment of the roller/multi-belt conveyor is favourably connected with a device setting it in vertical reciprocal motion, while the pressure beam of the belt conveyor is set, by means of pneumatic cylinders, in horizontal reciprocal motion, whereas both motions are synchronised with speed and timing of cutting the board-shaped half-product with fibrous structure by the multi rip saw device. It is also favourable when rotational speed and horizontal feed of the flying saw are synchronised with the belt conveyor speed.

Constructing the lamellar insulation mat in the form of a layer of sets of lamellas adjacent to each other by their side walls and made of polyester fibres the base of which is poly(ethylene terephthalate) (PET), a material of which plastic bottles are also manufactured, allowed to manufacture the layer from a material coming from recycling of PET bottles which translates into significant reduction of the mat manufacturing costs. Among further good points of the insulation mat according to the invention one should number also the fact that both the so-called PET eco-wool and the lining materials used to cover one of its surfaces can, as homogenous materials, after getting worn out and being dismounted from insulated devices, be subject to subsequent recycling which allows to categorise them as environment-friendly products.

However, the fundamental merit following from the use of PET-based eco-wool constituting the core of the lamellar insulation mat according to the invention consists in that contrary to the mineral wool used earlier, the PET (polyester) eco-wool is a dust-free material being at the same time friendly to human skin and therefore the mat can find its application in insulation of devices operating in the so-called clean rooms such as: operating theatres in hospitals, cleanrooms, food industry premises, and similar interiors. Moreover, the PET (polyester) eco-wool used to construct the insulation mat is characterised with high hydrophobic properties ensuring good insulation parameters even at high levels of air humidity in the environment where the insulated devices are operated, e.g. in the marine industry. Moreover, the material shows excellent acoustical insulation properties and is lighter than the mineral wool.

The subject of the invention is presented in its example embodiments on drawings, of which Fig. 1 shows the lamellar insulation mat with a vapour-barrier lining partially removed from one of its surfaces, in a perspective view; Fig. 2 - the lamellar insulation mat with a vapour-barrier lining on one of its surfaces and with self-adhesive glue layer covered by a protective coating, in a perspective view; Fig. 3 - a schematic diagram of the production line for manufacturing the lamellar insulation mat from ready-made board-shaped elements with fibrous structure, in a perspective view; Fig. 4 - detail "S" of the same production line showing, in a perspective view, the method of coupling the second two-segment roller/multi-belt conveyor with the pressure beam of the third belt conveyor; Fig. 5 - the same production line in a perspective view in the course of realisation of the method of manufacturing the insulation mat from ready-made earlier fabricated board-shaped half-products with fibrous structure; and Fig. 6 - detail "T" of the same production line depicting the instant of time when a lamella transferred onto the third belt conveyor moment is turned by 90°.

### Example 1

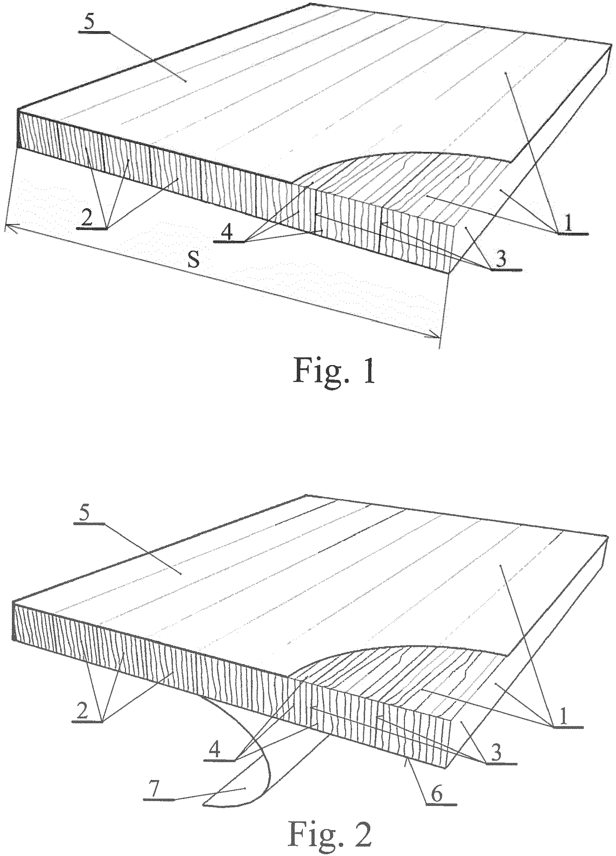

The lamellar insulation mat 1 according to the invention shown in Fig. 1 comprises a set of lamellas 2 constituting its width S adjacent to each other with their side walls 3, made of polyester fibres the base of which is poly(ethylene terephthalate) (PET), and their fibrous structure 4 is oriented perpendicularly with respect to the vapour-barrier lining of reinforced aluminised film 5 covering the set of lamellas on one side. Polyester fibres used to fabricate this mat had volumetric density equalling 20 kg/m³, the heat conductivity coefficient *X*_{D} = 0.038 W/(m·K), and the reaction-to-fire class of type B.

### Example 2

The lamellar insulation mat 1 has a structure identical to this shown in Fig. 1 and described in the first example embodiment, and the difference between them consists only in that on the second opposite surface it has additionally a self-adhesive glue layer 6 covered with removable PVC film 7 or removable paper sheet.

### Example 3

The lamellar insulation mat 1 according to the invention shown in Fig. 2 comprises a set of lamellas 2 made of polyester fibres the base of which is poly(ethylene terephthalate) (PET), and their fibrous structure 4 is oriented perpendicularly to vapour-barrier lining made of reinforced aluminium spray-coated film 5 and covering said set of lamellas, whereas the polyester fibres used to fabricate the mat had volumetric density equalling 40 kg/m³, the thermal conductivity coefficient equalling 0.041 W/(m·K), and the reaction-to-fire class of type B.

In further example embodiments of the insulation mat 1 its set of lamellas 2 was covered on one side not with the reinforced aluminised film 5 but with a PVC film or a glass fibre fabric or a multicoloured PE film.

### Example 4

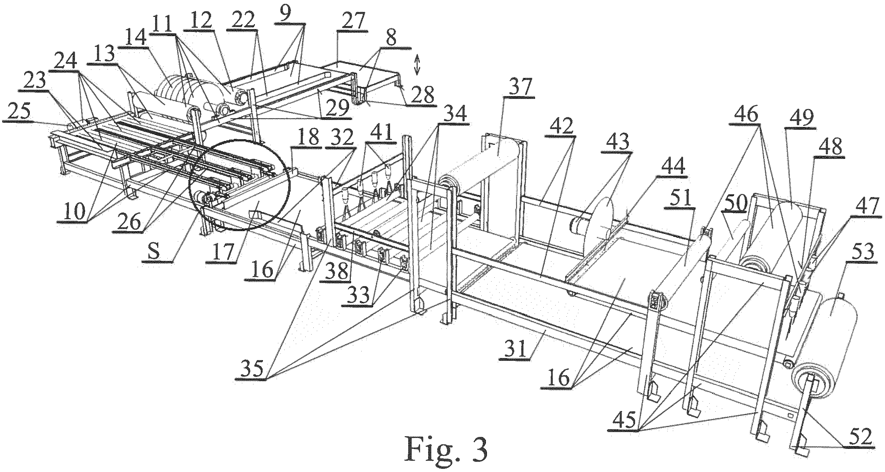

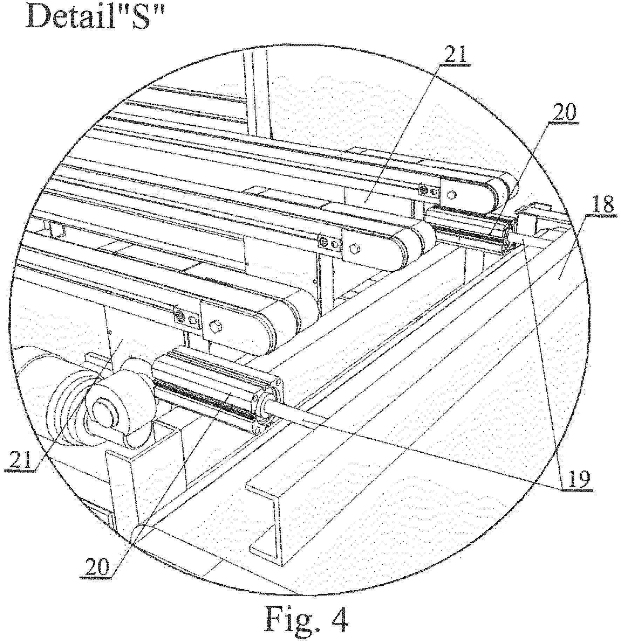

The production line for manufacturing the lamellar insulation mat from ready-made half-products in the form of board-shaped elements with fibrous structure, fibres of which are oriented horizontally along these elements, depicted schematically in Figs. 3 and 4, comprises a loading-receiving table 8, a first belt conveyor 9 situated downstream the table perpendicularly to the second two-segment roller/multi-belt conveyor 10, between which situated is a pressure-cutting unit 11 comprising a pressure roller 12, a set of two pressure rollers 13, and a six rip sawing device 14 cutting said half-products, whereas the inner end of the second multi-belt segment 15 of the second conveyor is adjacent to a third belt conveyor 16 situated cascade-like and parallel to said second conveyor at the discharge end of which and on belt 17 there is a sliding pressure beam 18 oriented transversely to said belt and connected with piston rods 19 of two side pneumatic cylinders 20 fixed to supporting beams 21 of the multi-belt segment 15 of the second two-segment conveyor and setting the beam in horizontal reciprocate motion. Moreover, the first conveyor 9 is equipped with two side strip guides 22 situated parallel to each other guiding the board-shaped insulation mat half-product for cutting and a second roller/multi-belt conveyor 10 which on its outer end is equipped with two strip guides 23 situated parallel to each other between which and opposite the assembly 11 situated is the first roller segment 24 of the roller/multi-belt conveyor 10 which is equipped with a mechanism 25 for sequential lowering and rising rollers of the roller segment 24. The second multi-belt segment 15 of the roller/multi-belt conveyor 10 comprises three separate multi-belt conveyors 26 situated between rollers of its roller segment 24. Top 27 of the loading-receiving table 8 rests on framed supporting structure 28 equipped with a mechanism (not shown in figures) setting said top in vertical reciprocate motion. The first belt conveyor 9 together with assembly 11 rest on the framed supporting structure 29, the second roller/multi-belt conveyor 10 rests on supporting structure 30, and the third belt conveyor 16 rests also on a separate framed supporting structure 31 which is equipped with two side strip guides 32, situated downstream the pressure beam 18 of the conveyor, and further downstream, with five brackets 33 for the set 34 of five transversely situated pressure rollers. Moreover, to the framed supporting structure 31 of the third belt conveyor 16 attached is also a framed supporting structure 35 of the first unrolling and spraying assembly 36 comprising a transversely situated roll 37 unrolling the permanent lining, said roll being fixed rotationally to longitudinal beams 38 of said supporting structure, the receiving roller 39 for receiving the unrolled lining, and the assembly 41 of glue spraying nozzles fixed to transverse beam 40 of the framed supporting structure 35, whereas downstream the framed supporting structure 35, between both longitudinal beams 42 of the framed supporting structure 31, there is a flying saw 43 situated perpendicularly to said beams and moving transversely along and by a transverse beam 44 fixed to both longitudinal beams 42. Further, downstream the flying saw and in the end portion of the framed supporting structure 31 of the third belt conveyor 16, alternatively attached to said structure is also a framed supporting structure 45, a second unrolling and spraying assembly 46, comprising also an assembly 47 of glue spraying nozzles attached to a transverse beam 48, transversely situated roller 49 unrolling the material covering the self-adhesive glue layer, and transversely situated downstream and below said roller there is the receiving roller 50 the function of which is to receive the unrolled covering material, and a transversely oriented revolving pressure roller 51 situated downstream of said receiving roller. Moreover, at the end of the third belt conveyor 16, there are vertically oriented brackets 52 fixed to both sides to the framed supporting structure 31 with roller 53 fixed to them for turning the fabricated and one-sidedly coat-covered insulation mat by 180° and transferring it to the second unrolling and spraying assembly 46.

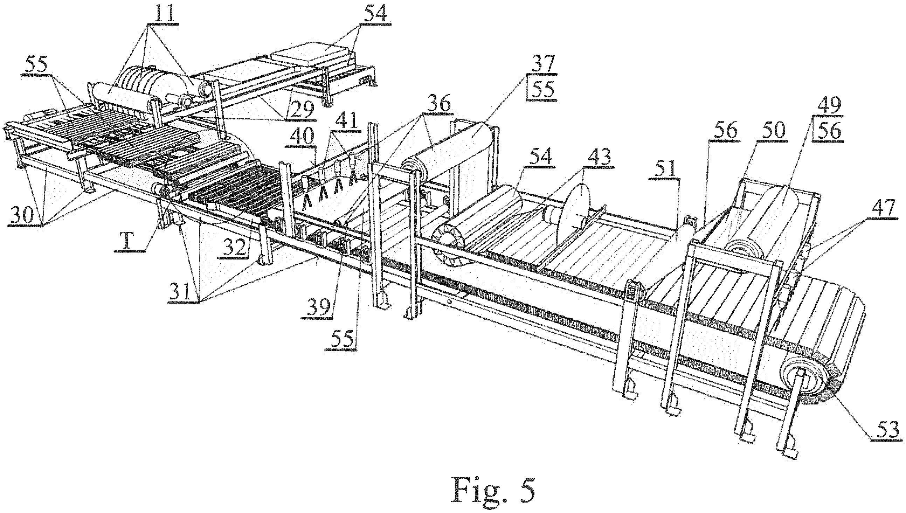

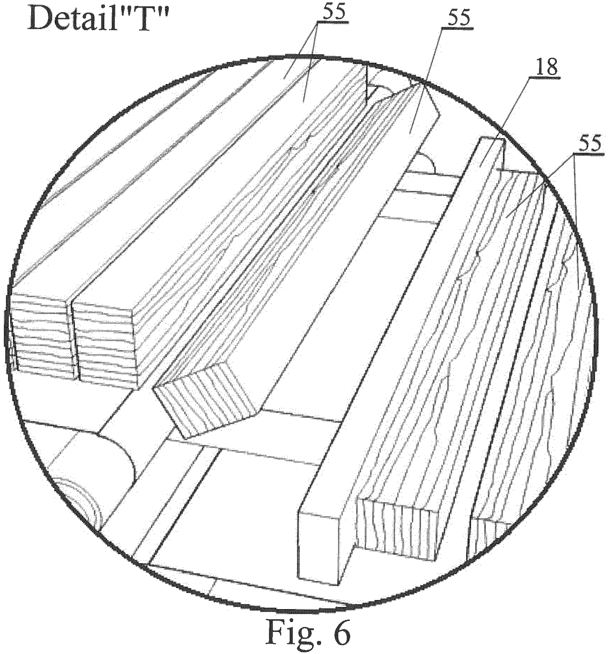

The principle of operation of the production line shown in Figs. 5 and 6 consists in that on top 27 of the loading-receiving table 8, a stack 54 is positioned of board-shaped half-products with fibrous structure oriented horizontally with respect to their position, and then these individual board-shaped elements are shifted onto the belt of the first belt conveyor 9, where said board-shaped elements are being transferred between side guides 22 of said first conveyor under a first pressure roller 12 which transfers them to a six rip saw device 14 which cuts said board-shaped elements into longitudinal lamellar elements 55 which, pressed by means of a set of two pressure rollers 13, are then transferred to a rising roller segment 24 of the two-segment roller/multi-belt conveyor 10. Then, the mechanism 25 lowers sequentially the level of rollers of the roller segment, and then the cut lamellar elements 55 are conveyed further by means of multi-belt conveyors 26 onto the third conveyor 16 situated below said roller segment, whereas in the course of leaving said multi-belt conveyor, individual lamellar elements 55 are rotated gravitationally by 90°, as a result of which the fibres of the lamellas are oriented perpendicularly to both of their horizontal surfaces. The lamellas 55 turned over this way by 90° by means of pressure beam 18 activated sequentially by means of pneumatic cylinders 20 are transferred, with the use of side strip guides 32 of the third belt conveyor 16, under the assembly 34 of pressure rollers and permanent lining 5 made e.g. of reinforced aluminised film unrolled from roller 37 and through the receiving roller 39 and an assembly of nozzles 41 spraying said film with adhesive 39 is transferred under the assembly 34 of pressure rollers which paste the film to one of surfaces of the manufactured lamellar insulation mat, and then, the lamellar insulation mat covered this way on one side, is being cut transversely into required lengths by means of flying saw 43, and than rolled into a roll with the use of any known method. Further, if there is a need to obtain a lamellar insulation mat having a second self-adhesive glue-covered surface, the above-described insulation mat with one of its surfaces covered with a permanent film lining, after leaving the belt of the third belt conveyor 16 is rolled onto roller 53 and, after being turned over by 180°, is returned to the belt conveyor, where the second surface of the mat is sprayed with a glue by means of assembly 47 of spraying nozzles, and then from roller 49 unrolled is the covering material 56 e.g. PVC film or paper, which is received by receiving roller 50 and fed under the pressing roller 51 as a result of which the material protecting the self-adhesive is joined with the adhesive layer applied onto the second surface of the produced lamellar insulation mat. Next, the lamellar insulation mat covered this way on both sides is being cut transversely by means of flying saw 43 into required lengths and rolled up forming thus a roll 54.

In subsequent embodiments of the production line, a four or eight rip saw device was used to cut board-shaped half-products, depending on the width and thickness of the board to be cut into lamellas.

### Legend:

1 - lamellar insulation mat
2 - a set of mat lamellas
3 - side walls of mat lamellas
4 - fibrous structure of a lamella
5 - permanent lining
6 - self-adhesive lining of the mat
7 - removable PVC film
8 - loading-receiving table
9 - the first belt conveyor
10 - the second roller/multi-belt conveyor
11 - pressure-cutting unit
12 - pressure roller
13 - set of two pressure rollers
14 - six rip saw device
15 - multi-belt segment of the second roller/multi-belt conveyor
16 - the third belt conveyor
17 - belt of the third belt conveyor
18 - pressure beam
19 - piston rods of pneumatic cylinders
20 - pneumatic cylinders
21 - supporting beams of the multi-belt segment
22 - strip guides of first belt conveyor
23 - strip guides of the second roller/multi-belt conveyor
24 - roller segment of the second roller/multi-belt conveyor
25 - roller segment mechanism
26 - multi-belt conveyors
27 - table top
28 - table supporting structure
29 - framed supporting structure of the first belt conveyor
30 - framed supporting structure of the second roller/multi-belt conveyor
31 - framed supporting structure of third belt conveyor
32 - strip guides of third belt conveyor
33 - pressure rollers assembly brackets
34 - pressure rollers assembly
35 - supporting structure of the first unrolling and spraying assembly
36 - unrolling and spraying assembly
37 - permanent lining unrolling roller
38 - longitudinal beams of the supporting structure of third belt conveyor
39 - permanent lining receiving roller
40 - transverse beam of the spraying nozzles assembly
41 - spraying nozzles assembly
42 - longitudinal beams of the third belt conveyor's framed supporting structure
43 - flying saw
44 - transverse beam
45 - framed supporting structure of the second unrolling and spraying assembly
46 - unrolling and spraying assembly
47 - spraying nozzles
48 - spraying nozzle's transverse beam
49 - glue layer protection material unwinding roller
50 - receiving roller
51 - pressure roller
52 - turning roller brackets
53 - roller turning the single-side covered insulation mat by 180°
54 - stack of board-shaped half-products
55 - lamellar elements

## Claims

1. A lamellar insulation mat comprising a set of lamellas constituting its width, adjacent to each other with their side walls, made of insulating and elastic material with fibrous structure oriented perpendicularly with respect to the vapour-barrier lining of reinforced aluminised film or a PVC film or a glass fibre fabric or a multicoloured PE film covering said mat on one side and if required, also on the other opposite side covered with a self-adhesive glue layer protected with removable plastic film or paper **characterised in that** its set of lamellas (2) is made of polyester fibres the base of which is poly(ethylene terephthalate) (PET).

2. The mat according to claim 1 **characterised in that** the polyester fibres used in it have the volumetric density of 20-40 kg/m³, thermal conductivity *X*_{D} = 0.038-0.041 W/(m·K), and the reaction-to-fire class of type B.

3. A production line for manufacturing the lamellar insulation mat from ready-made board-shaped elements with fibrous structure, with said mat having its outer surface covered permanently with a protective coat or additionally having also its second opposite surface covered with a self-adhesive glue layer protected with a removable coating, equipped with functionally interconnected belt conveyors supported on framed supporting structures and with technical means for longitudinal cutting these board-shaped elements into lamellas, turning them by 90°, and arranging them into a lamellar mat, spraying an adhesive onto an unrolled lining sheet and pressing it against the mat **characterised in that** it comprises a loading-receiving table (8), a belt conveyor (9) situated downstream said table, provided with two side strip guides (22) and situated perpendicularly to the two-segment roller/multi-belt conveyor (10), whereas between the two conveyors there is a pressure-cutting unit (11) comprising a pressure roller (12), a set of two pressure rollers (13) and a multi rip saw device (14), while the outer upper end of said two-segment conveyor is equipped with two strip guides (22) oriented perpendicularly with respect to each other, and between said guides there is a roller segment (24) constituting a portion of length of said conveyor and situated opposite a pair of pressure rollers (13), whereas between rollers of the roller segment (24) mounted are multi-belt conveyors (26) constituting the whole length of said conveyor, inner ends of said multi-belt conveyors being supported on the supporting structure (21) and connected detachably by means of pneumatic cylinders (20) with transversely situated pressure beam (18), resting on belt conveyor (16) situated cascade-like and parallel to it, and downstream the beam, the conveyor is equipped with two side strip guides (32), and further downstream of them with transversely situated bracket (35) equipped with a set of glue spraying nozzles (41) under which the conveyor is equipped with transversely situated assembly of pressure rollers (34) over which, on the supporting structure (35), an assembly is mounted comprising the roller (37) unrolling the lining material and situated below and a receiving roller (39) situated over said assembly to receive the material, while downstream said assembly, there is transversely and vertically situated flying saw (43), and downstream the saw on brackets (45) rotationally mounted are: another pressure roller (51), a feeding roller (49), and a receiving roller (50), and downstream them, to a transversely situated beam (48), mounted are successive adhesive sprayers (47), and moreover, at the end of the framed supporting structure (31) of the third belt conveyor (16), on the supporting structure (52) connected with the latter, there is a rotationally fixed turnover roller (53) turning the insulation mat over.

4. The production line according to claim 1 **characterised in that** the roller segment (24) of the roller/multi-belt conveyor (10) is connected with device (25) setting it in vertical reciprocal motion, whereas the pressure beam (18) of the belt conveyor (16) is set in horizontal reciprocal motion by means of pneumatic cylinders (20), and both motions are synchronised with the speed and timing at which the multi rip device (14) cuts the ready-made board-shaped element (54) with fibrous structure.

5. The production line according to claim 1 **characterised in that** the rotational speed and horizontal feed of the flying saw (43) are synchronised with the speed of the belt conveyor (16).
Legend:
1 - lamellar insulation mat
2 - a set of mat lamellas
3 - side walls of mat lamellas
4 - fibrous structure of a lamella
5 - permanent lining
6 - self-adhesive lining of the mat
7 - removable PVC film
8 - loading-receiving table
9 - the first belt conveyor
10 - the second roller/multi-belt conveyor
11 - pressure-cutting unit
12 - pressure roller
13 - set of two pressure rollers
14 - six rip saw device
15 - multi-belt segment of the second roller/multi-belt conveyor
16 - the third belt conveyor
17 - belt of the third belt conveyor
18 - pressure beam
19 - piston rods of pneumatic cylinders
20 - pneumatic cylinders
21 - supporting beams of the multi-belt segment
22 - strip guides of first belt conveyor
23 - strip guides of the second roller/multi-belt conveyor
24 - roller segment of the second roller/multi-belt conveyor
25 - roller segment mechanism
26 - multi-belt conveyors
27 - table top
28 - table supporting structure
29 - framed supporting structure of the first belt conveyor
30 - framed supporting structure of the second roller/multi-belt conveyor
31 - framed supporting structure of third belt conveyor
32 - strip guides of third belt conveyor
33 - pressure rollers assembly brackets
34 - pressure rollers assembly
35 - supporting structure of the first unrolling and spraying assembly
36 - unrolling and spraying assembly
37 - permanent lining unrolling roller
38 - longitudinal beams of the supporting structure of third belt conveyor
39 - permanent lining receiving roller
40 - transverse beam of the spraying nozzles assembly
41 - spraying nozzles assembly
42 - longitudinal beams of the third belt conveyor's framed supporting structure
43 - flying saw
44 - transverse beam
45 - framed supporting structure of the second unrolling and spraying assembly
46 - unrolling and spraying assembly
47 - spraying nozzles
48 - spraying nozzle's transverse beam
49 - glue layer protection material unwinding roller
50 - receiving roller
51 - pressure roller
52 - turning roller brackets
53 - roller turning the single-side covered insulation mat by 180°
54 - stack of board-shaped half-products
55 - lamellar elements
